# EUROPÄISCHE PATENTSCHRIFT

(11) **EP 3 585 625 B1**
(45) Veröffentlichungstag und Bekanntmachung des Hinweises auf die Patenterteilung: **25.11.2020**
(21) Anmeldenummer: 18701284.4
(22) Anmeldetag: 15.01.2018
(51) Int. Cl.: B60C 11/03, B60C 11/11

(54) **FAHRZEUGLUFTREIFEN**
PNEUMATIC VEHICLE TYRE
PNEUMATIQUE DE VÉHICULE

(30) Priorität: 24.02.2017 DE 102017203014
(43) Veröffentlichungstag der Anmeldung: 01.01.2020
(73) Patentinhaber: Continental Reifen Deutschland GmbH, 30165 Hannover (DE)
(72) Erfinder: NAGLATZKI, Paul, 30159 Hannover (DE); KRISTEN, Florian, 30171 Hannover (DE); MEINERS, Christian, 30459 Hannover (DE); LIPPERT, Frank, 31275 Lehrte (DE)
(74) Vertreter: Finger, Karsten
(86) Internationale Anmeldenummer: PCT/EP2018/050802
(87) Internationale Veröffentlichungsnummer: WO 2018/153568

(56) Entgegenhaltungen:
- WO-A1-2009/153821
- CN-A- 105 172 476
- JP-A- H06 127 218
- JP-A- H06 143 935
- JP-A- H06 305 307
- JP-A- H09 300 917
- JP-A- H10 324 116
- JP-A- 2002 316 516

## Beschreibung

### Fahrzeugluftreifen

Die Erfindung betrifft einen Fahrzeugluftreifen, welcher ein Nutzfahrzeugreifen oder ein Off-The-Road-Reifen ist, mit einem Laufstreifen mit über die Laufstreifenbreite durchgehenden Querrillen, welche zumindest abschnittsweise auf Profiltiefe ausgeführt sind und die Hauptrillen des Laufstreifens sind,
wobei paarweise nebeneinander und parallel zueinander, zur Umfangsrichtung unter einem Winkel von 10° bis 30° verlaufende Umfangsrillen den Laufstreifen in Profilblöcke gliedern, wobei in Umfangsrichtung aufeinander folgende Umfangsrillenpaare in axialer Richtung gegeneinander versetzt sind, sodass die Umfangsrillen der Umfangsrillenpaare in im Wesentlichen gleichen axialen Positionen beginnen und enden, wobei jede Umfangsrille mit einem über eine Querrille hinaus laufenden Abschnitt in einen zwischen den Umfangsrillen vorliegenden mittleren Profilblock reicht.

Nutzfahrzeugreifen mit derartigen Profilausgestaltungen sind beispielsweise als Reifen für industrielle Anwendungen, etwa auf Containerstaplern, bekannt. Die Querrillen verlaufen meist in einer "gestreckten" Z-Form über die Breite des Laufstreifens, ihre zu den Laufstreifenrändern verlaufenden Abschnitte sind sehr breit ausgeführt. Die zwischen den Querrillen gebildeten unstrukturierten Querklötze verleihen dem Laufstreifen vor allem im Neuzustand eine hohe Quersteifigkeit, die ungünstig für das Lenkverhalten des Fahrzeuges ist und einen unregelmäßigen Abrieb begünstigt.

Ein Off-The-Road-Reifen der eingangs genannten Art ist beispielsweise aus der JP H06 143 935 A bekannt. Diese Druckschrift offenbart Ausführungsbeispiele, bei welchen der Laufstreifen des Reifens über die Laufstreifenbreite durchgehende Querrillen aufweist. Paarweise nebeneinander und parallel zueinander verlaufende Umfangsrillen, welche zur Umfangsrichtung unter einem Winkel von 5° bis 30° verlaufen, gliedern den Laufstreifen in Profilblöcke. Die Umfangsrillenpaare sind zueinander versetzt und weisen in die Profilblöcke hineinragende Abschnitte auf.

Aus der JP 2002 316 516 A ist ein beispielsweise für Personenkraftwagen vorgesehener Fahrzeugluftreifen bekannt, welcher einen Laufstreifen aufweist, der mit über die Laufstreifenbreite sowie in Draufsicht leicht geschwungen verlaufenden Querrillen versehen ist. Eine Vielzahl von Umfangsrillen, welche zur Umfangsrichtung geneigt und parallel zueinander verlaufen, gliedern den Laufstreifen im mittleren Bereich in Profilblöcke, die in Umfangsrichtung in Draufsicht betrachtet eine auf den Spitzen stehende parallelogrammförmige Gestalt aufweisen.

Die CN 105 172 476 A offenbart einen Reifen für ein Fahrrad. Am Laustreifen des Reifens sind kreisbogenartig über die Laufstreifenbreite verlaufende Querrillen und zur axialen Richtung geneigte Umfangsrillen ausgebildet. Die Umfangsrillen verleihen dem Laufstreifen gemeinsam mit den Querrillen blockartige Profilstrukturen.

Der Erfindung liegt die Aufgabe zugrunde, einen Laufstreifen der eingangs genannten Art derart zu gestalten, dass er eine ausgewogenere Profilsteifigkeit aufweist und gleichmäßiger abreibt.

Gelöst wird die gestellte Aufgabe erfindungsgemäß dadurch, dass die Umfangsrillen eine geringere Tiefe als die Profiltiefe aufweisen und den Laufstreifen mit zwei Abschnitten jeweils zwischen drei in Umfangsrichtung aufeinander folgenden Querrillen in Profilblöcke gliedern, wobei jede Umfangsrille in zumindest einem Abschnitt seichter ausgeführt ist als in ihren sonstigen Abschnitten bzw. ihrem sonstigen Abschnitt.

Durch die gemäß der Erfindung vorgesehenen Umfangsrillen werden eine insgesamt gleichmäßige Steifigkeit und ein gleichmäßiger Abrieb in einem Laufstreifen erzielt, der als Hauptrillen ausgeprägte und sehr tiefe Querrillen aufweist. Mit zunehmendem Abrieb "verschwinden" die Umfangsrillen infolge ihrer seichteren Abschnitte auf eine Weise, die sich im Fahrverhalten kaum bemerkbar macht.

Bei einer bevorzugten Ausführungsform der Erfindung ist der in die mittleren Profilblöcke hineinreichende Abschnitt jeder Umfangsrille seichter als zumindest einer der beiden den Laufstreifen zwischen Querrillen in Profilblöcke gliedernden Abschnitte. Diese Ausführung sorgt für eine besonders günstige Steifigkeitsverteilung im Laufstreifen.

Bei einer weiteren vorteilhaften Ausführungsform der Erfindung weist der seichter ausgeführte Abschnitt der Umfangsrille einen Tiefenverlauf mit sich kontinuierlich verringernder Tiefe auf. Diese Ausführungsvariante vermeidet auf besonders günstige Weise abrupte Veränderungen im Fahrverhalten des Reifens bei zunehmenden Abrieb.

Es ist daher auch von Vorteil, wenn die Tiefe der in die mittleren Profilblöcke reichenden Abschnitte der Umfangsrillen beginnend bei ihren Einmündungsbereichen in die Querrillen bis zu ihren Enden innerhalb der Profilblöcke kontinuierlich abnimmt. Bei einem besonders günstigen Tiefenverlauf dieser Abschnitte weisen diese an den Einmündungsbereichen in die Querrillen eine Tiefe auf, die 10% bis 40% der Profiltiefe entspricht, wobei die Tiefe bis zum Ende der Abschnitte auf 10% bis 30% der Tiefe bei den Einmündungsbereichen abnimmt.

Für einen gleichmäßigen Abrieb ist es ferner vorteilhaft, wenn auch die Breite der in die mittleren Profilblöcke reichenden Abschnitte der Umfangsrillen in Richtung zu ihren Enden abnimmt.

Bevorzugt ist ferner eine Ausführung, bei der die Umfangsrillen in dem bzw. den Abschnitt(en) außerhalb des seichteren Abschnittes bzw. der seichteren Abschnitte eine konstante Tiefe von 10% bis 40% der Profiltiefe aufweisen.

Eine weitere erfindungsgemäße Maßnahme, die sich günstig auf die Steifigkeitsverteilung innerhalb des Laufstreifens auswirkt, besteht darin, dass die Umfangsrillen in den beiden, den Laufstreifen in Profilblöcke gliedernden Abschnitten eine konstante Breite von 3 mm bis 10 mm aufweisen.

Bei einer weiteren vorteilhaften Ausführungsvariante der Erfindung ist jeweils die mittlere Querrille der drei Querrillen, welche von den Umfangsrillenpaaren in Profilblöcke gegliedert sind, im Laufstreifenmittelbereich mit einem abgeknickten Abschnitt versehen, welcher zu den in Umfangsrichtung benachbarten, in die mittleren Profilblöcke reichenden Abschnitten gleich orientiert ist und insbesondere eine Tiefe aufweist, die der Tiefe dieser Abschnitte an ihren Einmündungsbereichen in die Querrillen entspricht. Durch diese geknickten Abschnitte erfolgt eine für einen gleichmäßigen Laufstreifenabrieb günstige Ausgestaltung der mittleren Profilblöcke. In diesem Zusammenhang ist es auch vorteilhaft, wenn der abgeknickte Abschnitt eine Breite aufweist, die der Breite jener Abschnitte der Umfangsrillen entspricht, die den Laufstreifen in Profilblöcke gliedern.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Frontansicht eines Fahrzeugluftreifens,
Fig. 2 einen Schnitt entlang der Linie II-II der Fig. 1 und
Fig. 3 einen Schnitt entlang der Linie III-III der Fig. 1.

Erfindungsgemäß ausgeführte Fahrzeugluftreifen sind insbesondere Off-The-Road-Reifen oder Nutzfahrzeugreifen für unterschiedlichste Einsatzzwecke, vorzugsweise groß dimensionierte Nutzfahrzeugreifen für Felgendurchmesser von mindestens 24 Zoll. Solche Reifen sind beispielsweise Reifen für Portalhubwagen, Reachstacker oder Containerstapler. Erfindungsgemäß ausgeführte Reifen weisen eine ein- oder mehrlagige Karkasse, entweder als Radialkarkasse oder als Diagonalkarkasse, und einen mehrlagigen Gürtelverband oder mehrere Breakerlagen auf.

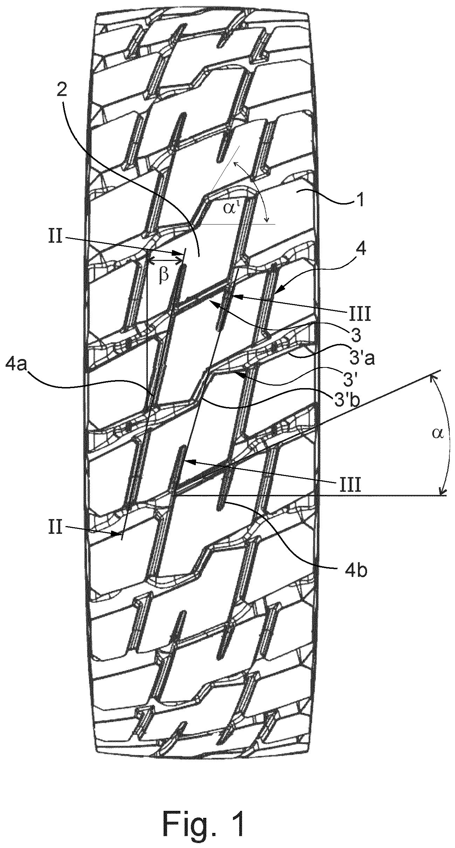

Der in Fig. 1 gezeigte profilierte Laufstreifen weist eine Blockstruktur mit relativ groß dimensionierten Profilblöcken 1, 2, nämlich schulterseitigen Profilblöcken 1 und im Laufstreifenmittelbereich angeordneten mittleren Profilblöcken 2, auf. Die Blockstruktur entsteht durch im Laufstreifen ausgebildete, den Laufstreifen durchquerende, ausgeprägte Querrillen 3, 3' und durch paarweise nebeneinander verlaufende, im Laufstreifen beidseitig endende Umfangsrillen 4. Die Querrillen 3, 3', die in Umfangsrichtung abwechselnd aufeinander folgen, erstrecken sich im Wesentlichen parallel zueinander und zur axialen Richtung unter einem spitzen Winkel α von 20° bis 40°, bei der vorliegenden Ausführungsform in der Größenordnung von etwa 30°. Zwischen den in Umfangrichtung aufeinander folgenden Querrillen 3, 3' befindet sich jeweils ein mittlerer Profilblock 2 und seitlich zu diesem je ein schulterseitiger Profilblock 1.

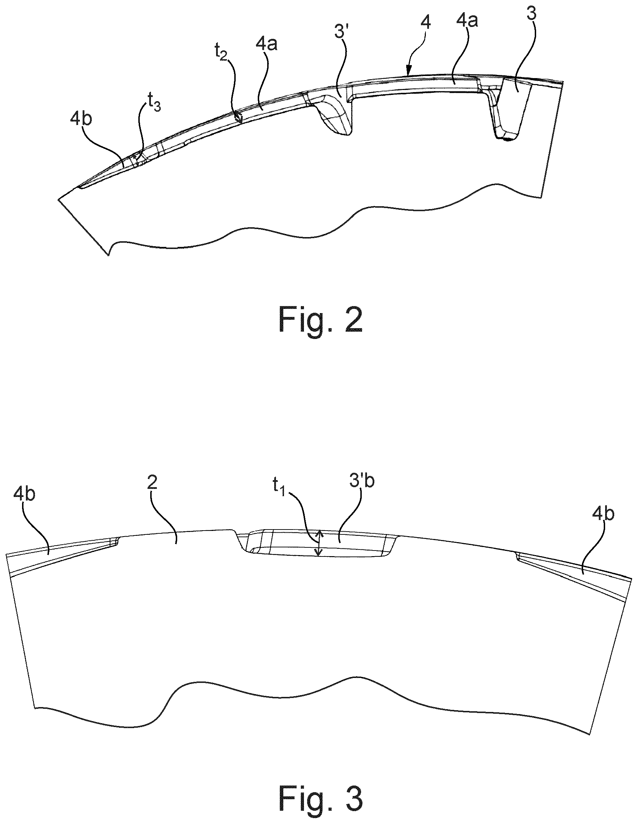

Die Querrillen 3, 3' sind die Hauptrillen und jene Rillen im Laufstreifen, die zumindest abschnittsweise auf Profiltiefe ausgeführt sind, wobei bei Nutzfahrzeugreifen die Profiltiefe, je nach Reifendimension und Einsatzweck des Reifens, 12,00 mm bis 95,00 mm beträgt. Bei der gezeigten Ausführung verlaufen die Querrillen 3 im Wesentlichen gerade über die Laufstreifenbreite, die Querrillen 3' sind in der Laufstreifenmitte lokal zweifach geknickt, so dass die Querrillen 3' zwei im Wesentlichen parallel zueinander und von der Laufstreifenmitte zu den Laufstreifenrändern unter dem Winkel α verlaufende Querrillenabschnitte 3'a und einen diese verbindenden kürzeren Querrillenabschnitt 3'b aufweisen, welcher unter einem Winkel α' von 15° bis 30° zur Umfangsrichtung verläuft. Die Querrillenabschnitte 3'b weisen ferner, wie es Fig. 3 zeigt, eine über ihre Erstreckung konstante Tiefe t₁ auf, die geringer ist als die Profiltiefe und 10% bis 40 % der Profitiefe beträgt. Die sonstige Ausführung der Querrillen 3, 3' mit breiteren und schmäleren Abschnitten sowie Grundanhebungen und dergleichen ist nicht Gegenstand der Erfindung und wird daher im Detail nicht erläutert.

Die Umfangsrillen 4 verlaufen sämtlich parallel zueinander und zur Umfangsrichtung unter einem Winkel β von 10° bis 30°, bei der gezeigten Ausführung in der Größenordnung von 15°. Jeweils zwei paarweise nebeneinander verlaufende Umfangsrillen 4 gliedern mit Abschnitten 4a den Laufstreifen zwischen einer Querrille 3, einer dieser benachbart angeordneten Querrille 3' und der nächsten in Umfangsrichtung anschließenden Querrille 3 in die Profilblöcke 1, 2. In Umfangsrichtung aufeinander folgende Umfangsrillenpaare sind in axialer Richtung gegeneinander versetzt, sodass die Umfangsrillen 4 der Umfangsrillenpaare in gleichen axialen Positionen beginnen und enden. Jede Umfangsrille 4 verläuft ferner mit einem Abschnitt 4b jeweils in einen mittleren Profilblock 2 hinein, welcher zwischen in Umfangsrichtung anschließenden Umfangsrillenpaaren gebildet ist. Die Abschnitte 4a enden jeweils im mittleren Bereich des betreffenden Profilblockes 2.

Die Abschnitte 4a der Umfangsrillen 4 zwischen den Profilblöcken 1 und 2 weisen eine - bis auf die unmittelbaren Einmündungsbereiche zu den Querrillen 3, 3' - konstante Breite auf, die je nach Reifendimension und Einsatzweck variieren kann, jedoch an der Laufstreifenperipherie mindestens 3,0 mm an beträgt und bis zu 10,0 mm betragen kann. Insbesondere weisen die Abschnitte 4a der Umfangsrillen 4 einen der üblichen Querschnitte mit in radialer Richtung oder unter einem kleinen spitzen Winkel von bis zu 10° zur radialen Richtung geneigten Rillenflanken und einen insbesondere in bekannter Weise gerundeten Rillengrund auf. Die Abschnitte 4a weisen ferner eine konstante Tiefe t₂, die 10% bis 40% der Profiltiefe entspricht, auf. Wie Fig. 1 zeigt, weisen die Abschnitte 4b eine geringere Bereite auf, als die Abschnitte 4a, ihre Breite am Einmündungsbereich in die jeweilige Querrille 3 ist um 10% bis 30% geringer als die Breite der Abschnitte 4a. Die Breite der Abschnitte 4b verringert sich zum Ende der Abschnitte 4b um bis zu 50%. Die Abschnitte 4b weisen ferner eine Tiefe t₃ auf, die ausgehend von ihrer Tiefe an den Einmündungsbereichen zu den Enden der Abschnitte 4b geringer wird. Wie die Schnittdarstellung in Fig. 3 zeigt, verringert sich die Tiefe der Abschnitte 4b beginnend bei ihrem Einmündungsbereich in die jeweilige Querrille 3, wo die Tiefe vorzugsweise der Tiefe t₂ entspricht, kontinuierlich bis zum Ende der Abschnitte 4b auf eine Tiefe, die 10% bis 30% der Tiefe t₂ entspricht.

Bei weiteren Ausführungen der Erfindung sind die Umfangsrillen 4 in einem anderen Abschnitt, etwa in einem der Abschnitte 4a, seichter ausgeführt als in dem zweiten Abschnitt 4a. Diese Maßnahme kann zusätzlich oder alternativ zur beschriebenen Ausführung des Abschnittes 4b erfolgen. Dabei wird entweder dieser Abschnitt 4a über seine Länge seichter ausgeführt oder es erfolgt eine im wesentlichen kontinuierliche Änderung der Tiefe, insbesondere ausgehend von den Mündungsbereichen zu den Querrillen 3, 3' bis in den mittleren Bereich des betreffenden Abschnittes 4a. Die geringste Tiefe beträgt 10% bis 20% der Tiefe t₂.

### Bezugszeichenliste

- 1 ......................: Profilblock
- 2 ......................: Profilblock
- 3 ......................: Querrille
- 3' .....................: Querrille
- 3'a, 3'b ............: Abschnitt
- 4 ......................: Umfangsrille
- 4a, 4b...............: Abschnitt
- t₁, t₂, t₃ .............: Tiefe
- T......................: Profiltiefe
- α,α' ..................: Winkel
- β ......................: Winkel

## Patentansprüche

1. Fahrzeugluftreifen, welcher ein Nutzfahrzeugreifen oder ein Off-The-Road-Reifen ist, mit einem Laufstreifen mit über die Laufstreifenbreite durchgehenden Querrillen (3, 3'), welche zumindest abschnittsweise auf Profiltiefe ausgeführt sind und die Hauptrillen des Laufstreifens sind,
wobei paarweise nebeneinander und parallel zueinander, zur Umfangsrichtung unter einem Winkel (α) von 10° bis 30° verlaufende Umfangsrillen (4) den Laufstreifen in Profilblöcke (1, 2) gliedern, wobei in Umfangsrichtung aufeinander folgende Umfangsrillenpaare in axialer Richtung gegeneinander versetzt sind, sodass die Umfangsrillen (4) der Umfangsrillenpaare in im Wesentlichen gleichen axialen Positionen beginnen und enden, wobei jede Umfangsrille (4) mit einem über eine Querrille (3) hinaus laufenden Abschnitt (4b) in einen zwischen den Umfangsrillen (4) vorliegenden mittleren Profilblock (2) reicht,
**dadurch gekennzeichnet,**
**dass** die Umfangsrillen (4) eine geringere Tiefe als die Profiltiefe aufweisen und den Laufstreifen mit zwei Abschnitten (4a) jeweils zwischen drei in Umfangsrichtung aufeinander folgenden Querrillen (3, 3') in Profilblöcke (1, 2) gliedern, wobei jede Umfangsrille (4) in zumindest einem Abschnitt (4a, 4b) seichter ausgeführt ist als in ihren sonstigen Abschnitten bzw. ihrem sonstigen Abschnitt.

2. Fahrzeugluftreifen nach Anspruch 1, **dadurch gekennzeichnet, dass** der in die mittleren Profilblöcke (2) hineinreichende Abschnitt (4b) jeder Umfangsrille (4) seichter ist als zumindest einer der beiden den Laufstreifen zwischen Querrillen (3, 3') in Profilblöcke (1, 2) gliedernden Abschnitte (4a).

3. Fahrzeugluftreifen nach Anspruch 1 oder 2, **dadurch gekennzeichnet, dass** der seichter ausgeführte Abschnitt (4a, 4b) der Umfangsrille (4) einen Tiefenverlauf mit sich kontinuierlich verringernder Tiefe aufweist.

4. Fahrzeugluftreifen nach einem der Ansprüche 1 bis 3, **dadurch gekennzeichnet, dass** die Tiefe der in die mittleren Profilblöcke (2) reichenden Abschnitte (4b) der Umfangsrillen (4) von ihren Einmündungsbereichen in die Querrillen (3) bis zu ihren Enden innerhalb der Profilblöcke (2) kontinuierlich abnimmt.

5. Fahrzeugluftreifen nach einem der Ansprüche 1 bis 4, **dadurch gekennzeichnet, dass** die Tiefe der in die mittleren Profilblöcke (2) reichenden Abschnitte (4b) der Umfangsrillen (4) an den Einmündungsbereichen in die Querrillen (3) 10 % bis 40% der Profiltiefe entspricht und bis zum Ende der Abschnitte (4b) auf 10% bis 30% der Tiefe bei den Einmündungsbereichen abnimmt.

6. Fahrzeugluftreifen nach einem der Ansprüche 1 bis 5, **dadurch gekennzeichnet, dass** die Breite der in die mittleren Profilblöcke (2) reichenden Abschnitte (4b) der Umfangsrillen (4) in Richtung zu ihren Enden abnimmt.

7. Fahrzeugluftreifen nach einem der Ansprüche 1 bis 6, **dadurch gekennzeichnet, dass** die Umfangsrillen (4) in dem bzw., den Abschnitt(en) (4a) außerhalb des/der seichten Abschnitte(s) (4b) eine konstante Tiefe (t₂) von 10% bis 40% der Profiltiefe aufweist bzw. aufweisen.

8. Fahrzeugluftreifen nach einem der Ansprüche 1 bis 7, **dadurch gekennzeichnet, dass** die Umfangsrillen (4) in den beiden, den Laufstreifen in Profilblöcke (1,2) gliedernden Abschnitten (4a) eine konstante Breite von 3 mm bis 10 mm aufweisen.

9. Fahrzeugluftreifen nach einem der Ansprüche 1 bis 8, **dadurch gekennzeichnet, dass** jeweils die mittlere Querrille (3') der drei Querrillen, welche von den Umfangsrillenpaaren in Profilblöcke (1,2) gegliedert sind, im Laufstreifenmittelbereich einen abgeknickten Abschnitt (3'b) aufweist, welcher zu den in Umfangsrichtung benachbarten, in die mittleren Profilblöcke (2) reichenden Abschnitten (4b) gleich orientiert ist und insbesondere eine Tiefe aufweist, die der Tiefe dieser Abschnitte (4b) an ihren Einmündungsbereichen zu den Querrillen (3) entspricht.

10. Fahrzeugluftreifen nach Anspruch 9, **dadurch gekennzeichnet,**
**dass** der abgeknickte Abschnitt (3'b) eine Breite aufweist, die der Breite jener Abschnitte (4a) der Umfangsrillen (4) entspricht, die den Laufstreifen in Profilblöcke (1, 2) gliedern.

## Claims

1. Pneumatic vehicle tire, which is a commercial vehicle tire or an off-the-road tire, having a tread with transverse grooves (3, 3'), which are continuous over the tread width and which, at least in sections, are formed to the profile depth and are the main grooves of the tread,
wherein circumferential grooves (4) that run adjacent to one another in pairs and parallel to one another, at an angle (α) with respect to the circumferential direction of 10° to 30° divide the tread into profile blocks (1, 2), wherein pairs of circumferential grooves following one another in the circumferential direction are offset with respect to one another in the axial direction, such that the circumferential grooves (4) of the pairs of circumferential grooves begin and end at substantially the same axial positions, wherein each circumferential groove (4) reaches, with a section (4b) running beyond a transverse groove (3), into a middle profile block (2) present between the circumferential grooves (4),
**characterized**
**in that** the circumferential grooves (4) have a smaller depth than the profile depth and divide the tread, with two sections (4a) in each case between three transverse grooves (3, 3') following one another in the circumferential direction, into profile blocks (1, 2), wherein each circumferential groove (4) is formed shallower in at least one section (4a, 4b) than in its other sections or its other section.

2. Pneumatic vehicle tire according to Claim 1, **characterized in that** the section (4b) of each circumferential groove (4) reaching into the middle profile blocks (2) is shallower than at least one of the two sections (4a) dividing the tread between transverse grooves (3, 3') into profile blocks (1, 2).

3. Pneumatic vehicle tire according to Claim 1 or 2, **characterized in that** the shallower formed section (4a, 4b) of the circumferential groove (4) has a depth profile with a continuously reducing depth.

4. Pneumatic vehicle tire according to one of Claims 1 to 3, **characterized in that** the depth of the sections (4b) of the circumferential grooves (4) reaching into the middle profile blocks (2) decreases continuously, beginning from the regions where they enter the transverse grooves (3) up to their ends within the profile blocks (2).

5. Pneumatic vehicle tire according to one of Claims 1 to 4, **characterized in that** the depth of the sections (4b) of the circumferential grooves (4) reaching into the middle profile blocks (2) at the regions where they enter the transverse grooves (3) corresponds to 10% to 40% of the profile depth and by the end of the sections (4b) decreases to 10% to 30% of the depth at the regions where they enter.

6. Pneumatic vehicle tire according to one of Claims 1 to 5, **characterized in that** the width of the sections (4b) of the circumferential grooves (4) reaching into the middle profile blocks (2) decreases in the direction of their ends.

7. Pneumatic vehicle tire according to one of Claims 1 to 6, **characterized in that** the circumferential grooves (4) have in the section (s) (4a) outside the shallower section(s) (4b) a constant depth (t₂) of 10% to 40% of the profile depth.

8. Pneumatic vehicle tire according to one of Claims 1 to 7, **characterized in that** the circumferential grooves (4) have in the two sections (4a) dividing the tread into profile blocks (1, 2) a constant width of 3 mm to 10 mm.

9. Pneumatic vehicle tire according to one of Claims 1 to 8, **characterized in that** the middle transverse groove (3') of the three transverse grooves that are divided by the pairs of circumferential grooves into profile blocks (1, 2) has in each case in the middle region of the tread a kinked section (3'b), which is oriented the same as the sections (4b) that are adjacent in the circumferential direction and reach into the middle profile blocks (2), and in particular has a depth which corresponds to the depth of these sections (4b) at the regions where they enter the transverse grooves (3).

10. Pneumatic vehicle tire according to Claim 9, **characterized in that** the kinked section (3'b) has a width which corresponds to the width of those sections (4a) of the circumferential grooves (4) that divide the tread into profile blocks (1, 2).

## Revendications

1. Pneumatique de véhicule, notamment un pneumatique de véhicule utilitaire ou un pneumatique tout terrain, comprenant une bande de roulement dotée de rayures transversales (3, 3') continues sur la largeur de bande de roulement qui sont réalisées au moins par endroits à la profondeur de sculpture et qui sont des rayures principales de la bande de roulement,
dans lequel des rayures circonférentielles (4) s'étendant par paires côte à côte et en parallèle, par rapport à la direction circonférentielle selon un angle (α) compris entre 10° et 30°, divisant la bande de roulement en blocs de sculpture (1, 2), dans lequel des paires de rayures circonférentielles successives dans la direction circonférentielle sont décalées les unes par rapport aux autres dans la direction axiale de sorte que les rayures circonférentielles (4) des paires de rayures circonférentielles commencent et terminent substantiellement dans les mêmes positions axiales, dans lequel chaque rayure circonférentielle (4) atteint par une partie (4b) s'étendant au-delà d'une rayure transversale (3) un bloc de sculpture central (2) présent entre les rayures circonférentielles (4),
**caractérisé en ce que** les rayures circonférentielles (4) présentent une profondeur inférieure à la profondeur de sculpture et divisent la bande de roulement en blocs de sculpture (1, 2), avec deux parties (4a) respectivement entre trois rayures transversales (3, 3') successives dans la direction circonférentielle, chaque rayure circonférentielle (4) étant réalisée de manière moins profonde dans au moins une partie (4a, 4b) que dans la ou les autres parties de celle-ci.

2. Pneumatique de véhicule selon la revendication 1, **caractérisé en ce que** la partie (4b) atteignant les blocs de sculpture centraux (2) de chaque rayure circonférentielle (4) est moins profonde qu'au moins l'une des deux parties (4a) divisant la bande de roulement en blocs de sculpture (1, 2) entre les rayures transversales (3, 3').

3. Pneumatique de véhicule selon la revendication 1 ou 2, **caractérisé en ce que** la partie (4a, 4b) réalisée de manière moins profonde de la rayure circonférentielle (4) présente une courbe de profondeur ayant une profondeur diminuant en continu.

4. Pneumatique de véhicule selon l'une quelconque des revendications 1 à 3, **caractérisé en ce que** la profondeur des parties (4b) atteignant les blocs de sculpture centraux (2) des rayures circonférentielles (4) diminue en continu de ses zones de jonction avec les rayures transversales (3) jusqu'aux extrémités de celles-ci à l'intérieur des blocs de sculpture (2).

5. Pneumatique de véhicule selon l'une quelconque des revendications 1 à 4, **caractérisé en ce que** la profondeur des parties (4b) atteignant les blocs de sculpture centraux (2) des rayures circonférentielles (4) est aux zones de jonction avec les rayures transversales (3) comprise entre 10 % et 40 % de la profondeur de sculpture et diminue jusqu'à la fin des parties (4b) jusqu'à entre 10 % et 30 % de la profondeur au niveau des zones de jonction.

6. Pneumatique de véhicule selon l'une quelconque des revendications 1 à 5, **caractérisé en ce que** la largeur des parties (4b) atteignant les blocs de sculpture centraux (2) des rayures circonférentielles (4) diminue en direction des extrémités de celles-ci.

7. Pneumatique de véhicule selon l'une quelconque des revendications 1 à 6, **caractérisé en ce que** les rayures circonférentielles (4) présentent dans la ou les parties (4a) en dehors de la ou des parties moins profondes (4b) une profondeur constante (t₂) comprise entre 10 % à 40 % de la profondeur de sculpture.

8. Pneumatique de véhicule selon l'une quelconque des revendications 1 à 7, **caractérisé en ce que** les rayures circonférentielles (4) présentent dans les deux parties (4a) divisant la bande de roulement en blocs de sculpture (1, 2) une largeur constante de 3 mm à 10 mm.

9. Pneumatique de véhicule selon l'une quelconque des revendications 1 à 8, **caractérisé en ce que** respectivement la rayure transversale centrale (3') des trois rayures transversales qui sont divisées en blocs de sculpture (1, 2) par les paires de rayures circonférentielles présente dans la zone centrale de la bande de roulement une partie coudée (3'b) qui est orientée de la même manière par rapport aux parties (4b) voisines dans la direction circonférentielle et atteignant les blocs de sculpture centraux (2), et présente en particulier une profondeur qui correspond à la profondeur de ces parties (4b) au niveau de leurs zones de jonction avec les rayures transversales (3).

10. Pneumatique de véhicule selon la revendication 9, **caractérisé en ce que** la partie coudée (3'b) présente une largeur qui correspond à la largeur des parties (4a) des rayures circonférentielles (4) qui divisent la bande de roulement en blocs de sculpture (1, 2).
